# EUROPÄISCHE PATENTANMELDUNG

(11) **EP 4 803 413 A1**
(43) Veröffentlichungstag der Anmeldung: **09.09.2026**
(21) Anmeldenummer: 26152627.1
(22) Anmeldetag: 19.01.2026
(51) Int. Cl.: B64C 3/56

(54) **BETÄTIGUNGSMECHANISMUS FÜR KLAPPBARE FLÜGEL**

(30) Priorität: 07.03.2025 DE 102025108723
(71) Anmelder: Liebherr-Aerospace Lindenberg GmbH, 88161 Lindenberg (DE)
(72) Erfinder: GAILE, Anton, 88299 Leutkirch (DE)
(74) Vertreter: Lorenz Seidler Gossel Part. mbB

(57) **Zusammenfassung**

Die vorliegende Erfindung betrifft eine Vorrichtung zur Betätigung eines klappbaren Flügels, mit mindestens zwei vorzugsweise durch einen Gelenkmechanismus miteinander verbundenen ersten (4) und zweiten (5) Hebeln, wobei ein erstes Ende (7) des ersten Hebels mit einem festen Teil (1) des Flügels verbunden ist, und ein erstes Ende (8) des zweiten Hebels mit einem beweglichen Teil (2) des Flügels verbunden ist.

## Beschreibung

Die vorliegende Erfindung betrifft einen Betätigungsmechanismus für einen klappbaren Flügel eines Luftfahrzeugs.

Klappbare Flugzeugflügel dienen dazu, die Flügel der Flieger möglichst kompakt zusammen zu falten, um den Platzbedarf der Flieger am Gate oder auf einem Träger auf ein Minimum zu reduzieren. Beispielsweise können die Flügel um 90° nach oben geklappt werden.

Bei herkömmlichen Flugzeugen mit klappbaren Flügeln wird ein jeder Flügel beispielweise mittels eines Drehantriebes hochgeklappt, wobei der Drehantrieb über ein Wellensystem und ein Winkelgetriebe mit einer redundanten, hydraulischen Antriebseinheit verbunden ist.

Die hydraulische Steuerung dieser Antriebseinheit erfolgt über zwei Ventilblöcke, welche jeweils von übergeordneten elektronischen Steuereinheiten geregelt werden.

Um den Flügel in der oberen Stellung zu halten, sind bei dieser herkömmlichen Lösung in der Antriebseinheit Bremsen eingebaut und um eine Überlast beim Klemmen des Systems zu vermeiden, sind die Antriebseinheiten mit einer Überlasteinrichtung ausgestattet.

Das bedeutet, herkömmliche Systeme sind komplex, schwer und teuer.

Der vorliegenden Erfindung liegt vor diesem Hintergrund die Aufgabe zugrunde, die Nachteile des Stands der Technik abzumildern oder gar ganz zu beseitigen.

Insbesondere liegt der vorliegenden Erfindung die spezifische Aufgabe zugrunde, eine einfache, kostengünstige und zuverlässige Möglichkeit zum Betätigen der klappbaren Flügel zu schaffen.

In anderen Worten geht es bei der Erfindung insbesondere darum, einen möglichst einfachen, platzsparenden, leichten, betriebssicheren und kostengünstigen Betätigungsmechanismus für einen klappbaren Flügel zu finden.

Diese Aufgabe wird durch eine Vorrichtung mit den Merkmalen des Anspruchs 1 sowie die weiteren Gegenstände der unabhängigen Ansprüche gelöst.

Vorteilhafte Ausführungsformen der Erfindung sind Gegenstand der Unteransprüche.

Demnach ist eine Vorrichtung zur Betätigung eines klappbaren Flügels vorgesehen, mit mindestens zwei, vorzugsweise durch einen Gelenkmechanismus miteinander verbundenen, ersten und zweiten Hebeln, wobei ein erstes Ende des ersten Hebels mit einem festen Teil des Flügels verbunden ist, und ein erstes Ende des zweiten Hebels mit einem beweglichen Teil des Flügels verbunden ist.

Eine solche Vorrichtung ist beipsielhaft in den Figuren gezeigt, welche die Erfindung illustrieren, aber nicht limitieren.

Der erste und der zweite Hebel sind vorzugsweise jeweils an ihrem dem ersten Ende gegenüberliegenden, zweiten Ende mit einem gemeinsamen Aktuator verbunden. Der Aktuator kann beispielsweise ein Linearantrieb sein.

Der gemeinsame Aktuator kann an einem ersten Ende mit dem festen Teil des Flügels und an einem zweiten Ende mit dem Gelenkmechanismus verbunden sein.

Die ersten und zweiten Hebel können eine identische Länge oder zumindets ähnliche Länge aufweisen, insbesondere kann die Länge des zweiten Hebels um nicht mehr als 20 %, vorzugsweise um weniger als 10 %, von der Länge des ersten Hebels abweichen.

Beträgt die Länge des ersten Hebels beispielsweise 100 cm, so beträgt die Länge des zweiten Hebels beispielsweise nicht mehr als 120 cm, vorzugsweis nicht mehr als 110 cm und insbesondere ebenfalls 100 cm.

Ein Drehpunkt des beweglichen Teils des Flügels ist vorzugsweise an dem festen Teil des Flügels an der Flügeloberkante oder benachbart dazu angeordnet.

Dies wird beispielhaft durch den Drehpunkt 3 in den Figuren illustriert.

Ein erster Punkt, in welchem das erste Ende des ersten Hebels mit dem festen Teil des Flügels verbunden ist, ist vorzugsweise zwischen einem rumpfseitigen Ende des festen Teils des Flügels und einem Drehpunkt des beweglichen Teils des Flügels an dem festen Teil des Flügels angeordnet.

Dies wird beispielhaft durch den Punkt P1 in den Figuren illustriert.

Ein zweiter Punkt, in welchem das erste Ende des zweiten Hebels mit dem beweglichen Teil des Flügels verbunden ist, ist vorzugsweise zwischen einem rumpfseitigen Ende des festen Teils des Flügels und einem Drehpunkt des beweglichen Teils des Flügels an dem festen Teil des Flügels angeordnet.

Dies wird beispielhaft durch den Punkt P2 in den Figuren illustriert.

Eine erfindungsgemäße Vorrichtung kann derart ausgelegt sein, dass der erste Punkt und der zweite Punkt, in einer Position, in welcher der bewegliche Teil des Flügels voll ausgeklappt ist, auf derselben Höhe zwischen dem rumpfseitigen Ende des festen Teils des Flügels und dem Drehpunkt des beweglichen Teils des Flügels an dem festen Teil des Flügels angeordnet sind.

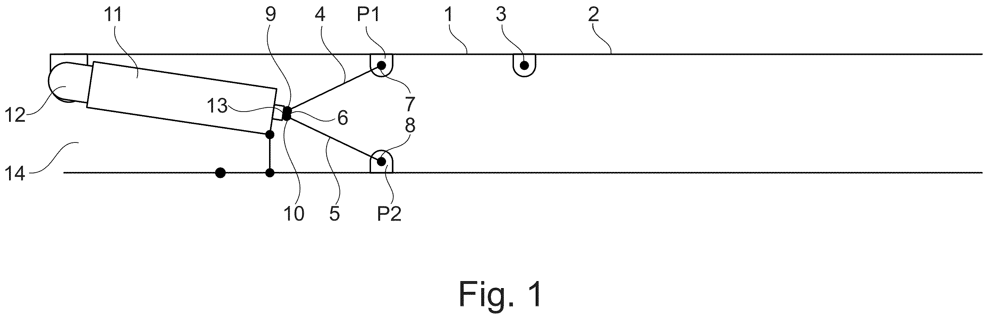

Dies ist beispielhaft in Fig. 1 illustriert, P1 und P2 liegen in Vertikalrichtung übereinander.

Eine erfindungsgemäße Vorrichtung kann derart ausgelegt sein, dass sich der zweite Punkt, in einer Position, in welcher der bewegliche Teil des Flügels teilweise hochgeklappt ist, in einer Richtung von dem rumpfseitigen Ende des festen Teils des Flügels zu dem Drehpunkt des beweglichen Teils des Flügels an dem festen Teil des Flügels zwischen dem ersten Punkt und dem Drehpunkt befindet.

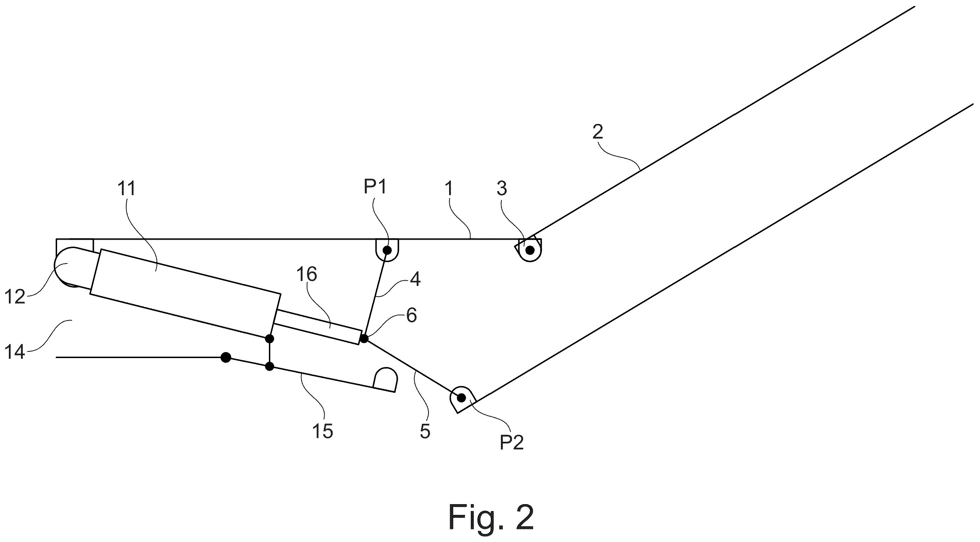

Dies ist beispielhaft in Fig. 2 illustriert, P2 liegt - bei einer Betrachtung in der Richtung von links nach rechts in Fig. 2 - zwischen P1 und dem Drehpunkt 3.

Eine erfindungsgemäße Vorrichtung kann derart ausgelegt sein, dass sich der Drehpunkt, in einer Position, in welcher der bewegliche Teil des Flügels vollständig hochgeklappt ist, in einer Richtung von dem rumpfseitigen Ende des festen Teils des Flügels zu dem Drehpunkt des beweglichen Teils des Flügels an dem festen Teil des Flügels zwischen dem ersten Punkt und dem zweiten Punkt befindet.

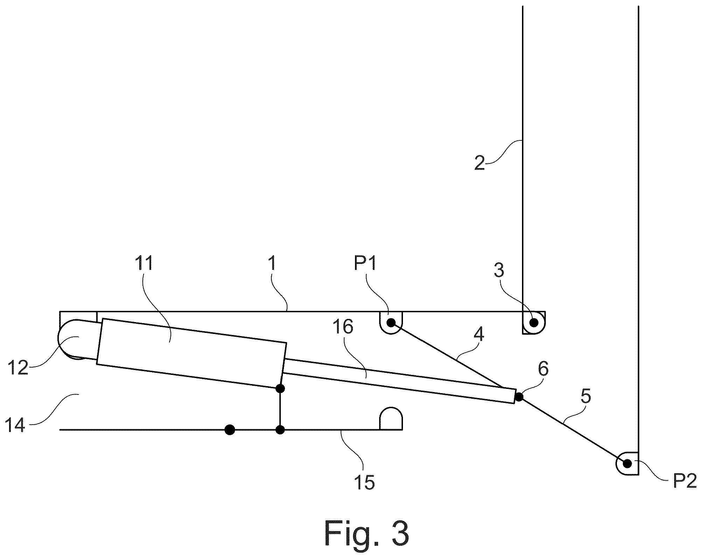

Dies ist beispielhaft in Fig. 3 illustriert, der Drehpunkt 3 liegt - bei einer Betrachtung in der Richtung von links nach rechts in Fig. 3- zwischen P1 und P2.

In anderen Worten lassen sich Merkmale der vorliegenden Erfindung wie folgt beschreiben:
Eine erfindungsgemäße Vorrichtung weist vorzugsweise mindestens eine der nachstehenden Komponenten auf:
- mindestens zwei vorzugsweise drehbar miteinander verbunden Hebeln, vorzugsweise mit gleicher oder ähnlicher Länge, wobei das eine freie Ende des einen Hebels mit dem beweglichen Teil des Flügels (in einem Anlenkpunkt des Hebels) verbunden ist und das freie Ende des anderen Hebels mit dem festen Teil des Flügels (in einem Abstützpunkt des Hebels) verbunden ist, und
- einem Betätigungselement, welches auf einer Seite mit dem festen Teil des Flügels (in einem Abstützpunkt des Betätigungselements) verbunden ist und auf der anderen Seite mit dem Gelenkpunkt der beiden Hebel verbunden ist.

In anderen Worten betrifft die vorliegende Erfindung eine Betätigungsvorrichtung (auch als Kinematik bezeichnet), welche es ermöglicht, auf einfache, platzsparende und kostengünstige Weise einen Flügel mit geringer Bauhöhe (Thin Wing) um 90° nach oben zu Klappen.

Eine erfindungsgemäße Vorrichtung weist hierzu vorzugsweise zwei Hebel auf, wobei die Abmessungen und die Anordnung der Dreh- und Anlenkpunkte für eine reibungslose Betätigung optimiert angeordnet sind.

Zudem ist vorzugsweise ein Linearantrieb (auch als Aktuator bezeichnet) vorhanden, welcher beispielsweise entweder als Hydraulikzylinder oder als Kugelrollspindel aufgeführt werden kann.

Bei einer erfindungsgemäßen Vorrichtung ist die Lage der Dreh- und Anlenkpunkte, vorzugsweise der Kinematik, vorzugsweise derart gewählt, dass mindestens eine, vorzugsweise mehrere, der nachstehenden Bedingungen erfüllt ist / sind:
a) Der Drehpunkt zwischen dem beweglichen und dem festen Teil des Flügels ist möglichst nahe an, vorzugsweise unmittelbar an, der Flügeloberkante angeordnet.
b) Der Abstützpunkt für die Kinematik am beweglichen Teil des Flügels ist zum Rumpf des Flugzeugs hin versetzt relativ zum Drehpunkt des beweglichen teils des Flügels angeordnet.
c) Der Anlenkpunkt des Hebels am beweglichen Teill des Flügels ist zum Rumpf des Flugzeugs hin nach innen versetzt relativ zum Drehpunkt des beweglichen Teils des Flügels und / oder ist möglichst nahe an, vorzugsweise unmittelbar an, der Flügelunterkante angeordnet. Hierdurch kann ein möglichst großer Hebelarm erwirkt werden.
d) Der Abstützpunkt des Betätigungselementes ist zum Rumpf des Flugzeugs hin nach innen versetzt relativ zum Abstützpunkt der Hebel und / oder möglichst nahe an, vorzugsweise unmittelbar an, der Flügeloberkante angeordnet.

Die vorstehend genannten Charakteristiken beziehen sich auf einen Flügel, der in Vertikalrichtung nach oben geklappt wird.

Soll der Flügel nach unten geklappt werden, sind die Drehpunkte entsprechend zu versetzten. Selbiges gilt bei einer gewünschten Horizontalbewegung des Flügels.

Das Einhalten der vorstehend genannten Charakteristiken ermöglicht es vorteilhafterweise, die notwendigen Betätigungskräfte möglichst gering zu halten.

Unter einer Kinematik ist im Rahmen der vorliegenden Erfindung vorzugsweise ein mechanischer Betätigungsmechanismus zu verstehen, mittels welchem ein beweglicher Teil eines klappbaren Flügels betätigt und bewegt werden kann.

Die Kinematik umfasst beispielsweise mechanische Bauteile und Elemente wie Hebel, Lager, Drehpunkte, Anlenkpunkte etc.

Bei einer erfindungsgemäßen Vorrichtung kann ein Verriegelungsmechanismus vorhanden sein, welcher den beweglichen Teil des Flügels sicher in einer gewünschten Position hält.

Der Verriegelungmechanismus, welcher z.B. den Flügel im Flug in gestreckter Position hält, greift vorzugsweise an dem Anlenkpunkt des Hebels bzw. der Hebel an.

An dem Anlenkpunkt ergibt sich vorzugsweise der maximale wirksame Hebelarm für den beweglichen Teil des Flügels, was die benötigten Haltekräfte reduziert, wodurch sich auch die Kräfte in der Struktur reduzieren. Der Verriegelungsmechanismus kann daher vorteillhafterweise kleiner und leichter ausgestaltet werden.

Die geometrische Ausgestaltung, beispielsweise die Hebellängen, die Anlenkpunkte, Abstützpunkte und der Drehpunkt des Flügels sind vorzugsweise so gewählt, dass bei komplett eingeklapptem Flügel (der bewegliche Teil des Flügels steht senkrecht nach oben) sich die beiden Hebel einer erfindungsgemäßen Vorrichtung parallel zueinander und / oder in einer Linie befinden, ggf. sogar etwas überzentriert (auch als "übercentert" bezeichnet) sind.

Wenn sich die Hebel in einer Line befinden, kann der geklappte Flügel vorzugsweise ohne äußere Kraft in der senkrechten Position gehalten werden. Es sind keine zusätzlichen Verriegelungen oder Bremsen für diese Position notwendig.

Zur Betätigung einer erfindungsgemäßen Vorrichtung können hydraulische und / oder elektrische Aktuatoren verwendet werden.

Die Aktuatoren bzw. sonstigen Betätigungselemente werden vorzugsweise redundant ausgeführt. Ein Aktuator ist ein Beispiel eines Betätigungselements oder kann ein solches umfassen.

Ist ein hydraulisches Betätigungselement vorgesehen und es befindet sich ein elektro-hydrostatischer (Flugsteuerungs-)Aktuator (EHA) in räumlicher Nähe, kann dessen elektrische- und hydrostatische Steuerung dazu genutzt werden, am Boden das hydraulische Betätigungselement für den beweglichen Teil des Flügels zu versorgen und zu steuern. Im Flug dient dieselbe Steuerung/Regelung vorzugsweise zur Fluglageregelung oder einem anderen Zweck (z.B. fahren der Landeklappen).

Durch eine derartige Mehrfachbelegung von Elektronikkomponenten mit mehreren Funktionen kann der apparative Aufwand reduziert werden.

Ist ein elektromechanisches Betätigungselement vorgesehen, kann auch hier eine vorhandene Elektronikeinheit (z.B. eine Leistungs- und /oder Kontrollelektronik), welche im Flug benötigt wird, um z.B. eine Flugsteuerungsfläche, eine Landeklappe oder eine Spoilerklappe zu betätigen, dazu genutzt werden, um am Boden den Betätigungsmechanismus für den beweglichen Teil des Flügels zu betätigen.

Auch durch diese Mehrfachbelegung von Elektronikkomponenten mit mehreren Funktionen kann der apparative Aufwand reduziert werden.

Weiterhin ist eine erfindungsgemäße Vorrichtung dazu geeignet, eine Böen-Minderung im Flug zu erreichen. Für diesen Fall ist eine entsprechend programmierte Steuereinheit vorgesehen, die die erfindungsgemäße Vorrichtung entsprechend ansteuert.

Vorzugsweise wird bei diesem Anwendungsfall im Flug der bewegliche Teil des Flügels hauptsächlich, vorzugsweise nur, über das Betätigungselement, vorzugsweise mindestens einen Aktuator einer erfindungsgemäßen Vorrichtung, in Lage gehalten. Im Betätigungselement / Aktuator ist durch die Steuereinheit vorzugsweise eine der aktuellen Flugbedingung zugeordnete Kraftbegrenzung eingestellt.

Wird diese Last überschritten, z.B. durch eine Böe, gibt das freie Flügelende automatisch nach und wird nach oben gedrückt. Eine Beschädigung des Flügels wird somit vermieden.

Bei Unterschreiten der Last sorgt die im Betätigungselement eingestellte Kraft automatisch wieder dafür, dass der bewegliche Teil des Flügels wieder in die gestreckte Position gedrückt wird.

Insbesondere bei der Verwendung eines hydraulischen Betätigungselementes kann die Kraft sehr einfach über ein Druckregelventil eingestellt werden.

Auch bietet eine derartige erfindungsgemäße Vorrichtung den Vorteil, dass die Reibungen und Massenkräfte im System minimal sind, wodurch das System geringe Toleranzen aufweist und beim Ansprechen wenig Lastpeaks aufweist.

Der Hauptvorteil einer solchen erfindungsgemäßen Lösung liegt jedoch darin, dass keine schnellen Regelkreise erforderlich sind, da ohne zusätzliche Sensoren auf Störungen (z.B. Böen) reagiert werden kann.

Folgende weitere Merkmale / Varianten sind bei einer erfindungsgemäßen Vorrichtung denkbar:
Die Betätigung des beweglichen Teils des klappbaren Flügels kann grundsätzlich über mindestens einen Aktuator, also auch über zwei oder mehr parallel geschaltete Aktuatoren erfolgen.

Aus Redundanzgründen kann es bei bestimmten Anwendungen sinnvoll sein, bei einer erfindungsgemäßen Vorrichtung die Kinematik mehrfach bzw. redundant auszuführen.

Beispielsweise können mehrere Hebel parallel vorgesehen werden oder Hebel mit doppeltem Lastpfad zum Einsatz kommen.

Statt eines Linearantriebs kann grundsätzlich auch ein rotativer elektromechanischer Antrieb vorgesehen sein, welcher entweder direkt an einem Gelenkpunkt angreift, z.B. am oberen Abstützpunkt des Hebels, oder alternativ über einen Zwischenhebel auf den Gelenkpunkt der beiden Hebel wirkt (wie der hydraulische Aktuator).

Da während des Klappens des Flügels der Betätigungszylinder aus dem Flügelprofil heraustritt, kann es vorteilhaft sein, in diesem Bereich der Flügelhaut eine bewegliche Klappe anzubringen.

Die Klappe wird vorzugsweise direkt an den Aktuator bzw. dessen Betätigungselement / Betätigungszylinder angebunden, so dass die Bewegung des Zylinders automatisch für ein Öffnen und Schließen dieser Klappe sorgt.

Ein erfindungsgemäße Vorrichtung kann mindestens einen Aktuator aufweisen, der ein hydraulischer und / oder elektrohydraulischer und / oder elektromechanischer Aktuator ist.

Aus Redundanzgründen können zwei oder mehr, gleichartige oder verschiedene, Aktuatoren zur Betätigung verbaut sein.

Ein Aktuator einer erfindungsgemäßen Vorrichtung kann sich eine gemeinsame elektrische- und / oder hydrostatische Steuerung mit einem Flugsteuerungskatuator teilen, wobei diese Steuerung vorzugsweise im Flug mit dem Flugsteuerungaktuator verbunden ist und am Boden mit dem Aktuator für die Betätigung des Gelenkmechanismuses verbunden ist.

Alternativ ode rzusäzlich kann sich ein Aktuator einer erfindungsgemäßen Vorrichtung eine gemeinsame elektrische Steuerung mit einem anderen Antrieb teilen, welcher nicht zeitgleich mit dem Gelenkmechanismus betätigt werden muss.

Weiterhin kann eine erifndungsgemäße Vorrichtung derart ausgelegt sein, dass eine Bewegung des mindetsens einen Aktuators der Vorrichtung dazu nutzbar ist oder genutzt wird, eine Abdeckklappe in der Flügelhaut zu öffnen und wieder zu schließen.

Weiterhin betrifft die vorliegende Erfindung ein Luftfahrzeug, vorzugsweise ein Flugzeug, mit mindestens einer Vorrichtung gemäß der vorliegenden Erfindung.

Zudem betrifft die vorliegende Erfindung eine Verwendung einer Vorrichtung gemäß der vorliegenden Erfindung zur Fertigung und / oder Steuerung eines Luftfahrzeugs, vorzugsweise eines Flugzeugs.

Ein weiterer Aspekt der vorliegenden Erfindung betrifft eine Verwendung einer Vorrichtung gemäß der vorliegenden Erfindung zur Reduktion von Böeneffekten bei einem Luftfahrzeug, vorzugsweise einem Flugzeug.

Weiterhin ergeben sich ergeben sich folgende beispielhafte Vorteile durch die vorliegende Erfindung:
Der durch eine erfindungsgemäße Vorrichtung bereitgestellte Betätigungsmechanismus ist kein Strukturteil, sondern nur ein Systemteil, wodurch sich die Kosten hierfür reduzieren.

In anderen Worten ist eine erfindungsgemäße Vorrichtung kein Bestandteil einer kritischen Tragestruktur des Flugzeugs, sodass beispielswiese verringerte regulatorische Anforderungen gelten.

Die Betätigung der Kinematik ist mittels einfacher, bewährter, betriebssicherer hydraulischer Zylinder möglich.

Die Kinematik einer erfindungsgemäßen Vorrichtung ist reduziert designt und somit besonders robust sowie wenig störungsanfällig.

Die Regelung einer erfindungsgemäßen Vorrichtung kann mittels einfacher, betriebserprobter hydraulischer Ventile erfolgen.

Die Ansteuerung einer erfindungsgemäßen Vorrichtung kann mit der Steuerung eines Stellantriebs für eine Steuerfläche kombiniert werden (ähnlich ESTER). Hierdurch wir die Gesamteffizienz erhöht, denn Elektronikbauteile werden für mehrere Funktionen verwendet, sodass der apparative Aufwand reduziert ist.

Eine erfindungsgemäße Vorrichtung kann mit einfachen Mitteln auch zu einem "Inflight" Klappmechanismus gewandelt werden, sodass der bewegliche Teil des klappbaren Flügels auch während des Flugs betätigbar ist. Hierfür ist insbesondere eine Anpassung der Steuerung der erfindungsgemäßen Vorrichtung erforderlich.

Eine erfindungsgemäße Vorrichtung bietet somit einen apparativ einfachen, aus bewährten Komponenten aufgebauten Mechanismus zum Betätigen eines beweglichen Teils eines klappbaren Flügels, welcher betriebssicher, wartungsarm und auch kostengünstig ist.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können.

Ebenso schließt die Verwendung des Plurals auch das Vorhandensein des fraglichen Elementes in der Einzahl ein und umgekehrt umfasst der Singular auch mehrere der fraglichen Elemente.

Weiterhin können alle hierin beschriebenen Merkmale der Erfindung beliebig miteinander kombiniert oder voneinander isoliert beansprucht werden, die Offenbarung ist also nicht auf explizit genannte Merkmalskombinationen beschränkt.

Weitere Einzelheiten und Vorteile der Erfindung werden anhand der in der Zeichnung dargestellten Ausführungsbeispiele näher erläutert.

Hierbei bezeichnen gleiche Bezugszeichen gleiche oder ähnliche Bauteile.

Es zeigt:
- Figur 1:: eine Schemazeichnung einer erfindungsgemäßen Vorrichtung bei heruntergeklapptem Flügel.
- Figur 2:: eine Schemazeichnung der erfindungsgemäßen Vorrichtung gemäß Fig.1 bei halb hochgeklapptem Flügel.
- Figur 3:: eine Schemazeichnung der erfindungsgemäßen Vorrichtung gemäß Fig.1 bei vollständig hochgeklapptem Flügel.

Wie in Fig. 1 gezeigt, weist ein klappbarer Flügel einen festen Teil 1 und einen beweglichen Teil 2 auf. Der bewegliche Teil 2 ist an dem festen Teil 1 in einem Drehpunkt 3 gelagert.

Der bewegliche Teil 2 kann mittels einer erfindungsgemäßen Betätigungsvorrichtung betätigt werden.

Diese weist einen ersten Hebel 4 und einen zweiten Hebel 5 auf, die durch einen Gelenkmechanismus 6 miteinander verbunden sind.

Ein erstes Ende 7 des ersten Hebels 4 ist mit dem festen Teil 1 des Flügels verbunden und ein erstes Ende 8 des zweiten Hebels 5 ist mit dem beweglichen Teil 2 des Flügels verbunden.

Der erste und der zweite Hebel 4,5 sind jeweils an ihrem zweiten, dem ersten Ende gegenüberliegenden, zweiten Ende 9, 10 über den Gelenkmechanismus 6 mit einem gemeinsamen Aktuator 11 verbunden.

Der Aktuator 11 kann ein Linearantrieb sein, der in der in Fig. 1 gezeigten Position nicht ausgefahren ist.

Der gemeinsame Aktuator 11 ist an einem ersten Ende 12 mit dem festen Teil 1 des Flügels und an einem zweiten Ende 13 mit dem Gelenkmechanismus 6 verbunden.

Die ersten und zweiten Hebel 4,5 weisen in diesem Beispiel eine identische Länge auf.

Der Drehpunkt 3 des beweglichen Teils 2 des Flügels ist an dem festen Teil 1 des Flügels an der Flügeloberkante angeordnet.

Ein erster Punkt P1, in welchem das erste Ende 7 des ersten Hebels 4 mit dem festen Teil 1 des Flügels verbunden ist, ist zwischen einem rumpfseitigen Ende 14 des festen Teils 1 des Flügels und dem Drehpunkt 3 des beweglichen Teils 2 des Flügels an dem festen Teil 1 des Flügels angeordnet.

Auch der Punkt P1 ist an der Fllügeloberkante angeordnet.

Ein zweiter Punkt P2, in welchem das erste Ende 8 des zweiten Hebels 5 mit dem beweglichen Teil 2 des Flügels verbunden ist, ist zwischen dem rumpfseitigen Ende 14 des festen Teils 1 des Flügels und dem Drehpunkt 3 des beweglichen Teils 2 des Flügels an dem festen Teil 1 des Flügels angeordnet.

Der Punkt P2 ist an der Flügelunterkante oder zumindest benachbart dazu angeordnet.

In der in Fig. 1 gezeigten Variante liegen bei ausgeklapptem Flügel der erste Punkt P1 und der zweite Punkt P2 auf derselben Höhe (in Fig. 1 entlang einer gemeinsamen vertikalen Gerade) zwischen dem rumpfseitigen Ende 14 des festen Teils 1 des Flügels und dem Drehpunkt 3 des beweglichen Teils 2 des Flügels an dem festen Teil 1 des Flügels.

Fig. 2 zeigt den Mechanismus aus Fig. 1 bei teilweise verfahrenem / hochgeklapptem beweglichen Teil 2 des Flügels.

In dieser Darstellung ist ebenfalls eine Klappe 15 des festen Teils 1 des Flügels erkennbar, welche aufklappt, um eine ungestörte Bewegung des zweiten Hebels 5 zu ermöglichen.

Der Aktuator 11 ist in dieser Position teilweise ausgefahren, das Betätigungselement 16 des Linearantriebs ist sichtbar.

In dieser Position des halbgeklappten beweglichen Teils 2 des Flügels ist der Punkt P2 entlang der Richtung von dem rumpfseitigen Ende 14 zu dem beweglichen Teil 2 (in Fig. 2 von links nach rechts) zwischen den Punkten P1 und 3 angeordnet.

In Fig. 3 ist der bewegliche Teil 2 des Flügels vollständig hochgeklappt, in diesem Beispiel um 90 ° nach oben.

Der Aktuator 11 ist in dieser Position vollständig ausgefahren, das Betätigungselement 16 des Linearantriebs ist sichtbar.

Die Hebel 4 und 5 sind in dieser Position parallel angeordnet und bilden eine gemeinsame Linie.

In dieser Position des hochgeklappten beweglichen Teils 2 des Flügels ist der Drehpunkt 3 entlang der Richtung von dem rumpfseitigen Ende 14 zu dem beweglichen Teil 2 (in Fig. 3 von links nach rechts) zwischen den Punkten P1 und P2 angeordnet.

Die Klappe 15 ist in dieser Position wieder eingeklappt.

In den Figuren wurde beispielhaft eine Variante gezeigt, in welcher der bewegliche Teil des Flügels um 90 ° hochklappbar ist.

Selbstverständlich ist die Erfindung hierauf nicht beschränkt. Der bewegliche Teil kann auch vertikal nach unten oder horizontal beweglich sein.

In diesem Fall ist somit die in den Figuren offenbarte Betätigungsvorrichtung entsprechend anders anzuordnen.

## Patentansprüche

1. Vorrichtung zur Betätigung eines klappbaren Flügels, mit:
- mindestens zwei vorzugsweise durch einen Gelenkmechanismus miteinander verbundenen ersten und zweiten Hebeln, wobei
- ein erstes Ende des ersten Hebels mit einem festen Teil des Flügels verbunden ist, und ein erstes Ende des zweiten Hebels mit einem beweglichen Teil des Flügels verbunden ist.

2. Vorrichtung gemäß Anspruch 1, wobei der erste und der zweite Hebel jeweils an ihrem zweiten, dem ersten Ende gegenüberliegenden, zweiten Ende mit einem gemeinsamen Aktuator verbunden sind.

3. Vorrichtung gemäß Anspruch 2, wobei der gemeinsame Aktuator an einem ersten Ende mit dem festen Teil des Flügels und an einem zweiten Ende mit dem Gelenkmechanismus verbunden ist.

4. Vorrichtung gemäß einem der vorhergehenden Ansprüche, wobei die ersten und zweiten Hebel eine identische Länge aufweisen oder die Länge des zweiten Hebels um nicht mehr als 20 %, vorzugsweise um weniger als 10 % von der Länge des ersten Hebels abweicht.

5. Vorrichtung gemäß einem der vorhergehenden Ansprüche, wobei ein Drehpunkt des beweglichen Teils des Flügels an dem festen Teil des Flügels an der Flügeloberkante oder benachbart dazu angeordnet ist.

6. Vorrichtung gemäß einem der vorhergehenden Ansprüche, wobei ein erster Punkt, in welchem das erste Ende des ersten Hebels mit dem festen Teil des Flügels verbunden ist, zwischen einem rumpfseitigen Ende des festen Teils des Flügels und einem Drehpunkt des beweglichen Teils des Flügels an dem festen Teil des Flügels angeordnet ist.

7. Vorrichtung gemäß einem der vorhergehenden Ansprüche, wobei ein zweiter Punkt, in welchem das erste Ende des zweiten Hebels mit dem beweglichen Teil des Flügels verbunden ist, zwischen einem rumpfseitigen Ende des festen Teils des Flügels und einem Drehpunkt des beweglichen Teils des Flügels an dem festen Teil des Flügels angeordnet ist.

8. Vorrichtung gemäß Anspruch 7, wobei der erste Punkt und der zweite Punkt auf derselben Höhe zwischen dem rumpfseitigen Ende des festen Teils des Flügels und dem Drehpunkt des beweglichen Teils des Flügels an dem festen Teil des Flügels angeordnet sind.

9. Vorrichtung gemäß einem der Ansprüche 2 bis 8, **dadurch gekennzeichnet, dass** der Aktuator ein hydraulischer oder elektrohydraulischer Aktuator ist.

10. Vorrichtung nach Anspruch 9, **dadurch gekennzeichnet, dass** sich der Aktuator eine gemeinsame elektrische- und hydrostatische Steuerung mit einem Flugsteuerungskatuator teilt, wobei diese dazu ausgelegt ist, im Flug mit dem Flugsteuerungaktuator verbunden zu sein und am Boden mit dem Aktuator für die Betätigung des Gelenkmechanismuses verbunden zu sein.

11. Vorrichtung gemäß einem der Ansprüche 2 bis 8, **dadurch gekennzeichnet, dass** der Aktuator ein elektromechanischer Aktuator ist.

12. Vorrichtung nach Anspruch 11, **dadurch gekennzeichnet, dass** sich der Aktuator eine gemeinsame elektrische Steuerung mit einem anderen Antrieb teilt, welcher nicht zeitgleich mit dem Gelenkmechanismus betätigt werden muss.

13. Vorrichtung gemäß einem der Ansprüche 2 bis 8, **dadurch gekennzeichnet, dass** die Bewegung des Aktuators dazu genutzt wird, eine Abdeckklappe in der Flügelhaut zu öffnen und wieder zu schließen.

14. Vorrichtung gemäß einem der Ansprüche 1 bis 8, **dadurch gekennzeichnet, dass** aus Redundanzgründen zwei oder mehr Aktuatoren zur Betätigung verbaut sind.

15. Luftfahrzeug, vorzugsweise Flugzeug, mit mindestens einer Vorrichtung gemäß einem der Ansprüche 1 bis 14.
